# EUROPEAN PATENT APPLICATION

(11) **EP 0 999 428 A1**
(43) Date of publication of application: **10.05.2000**
(21) Application number: 99121857.9
(22) Date of filing: 04.11.1999
(51) Int. Cl.: G01B 7/28, G01B 7/13, G01B 7/16, G01B 7/287

(54) **Pipeline inspection device**

(30) Priority: 04.11.1998 GB 9824141
(71) Applicant: Advanced Engineering Solutions Ltd., Cramlington, Northumberland NE23 9WF (GB)
(72) Inventor: Ward, Peter, Cramlington, Northumberland (GB)
(74) Representative: Wood, Graham

(57) **Abstract**

The invention relates to the provision of a device which is provided to be inserted into and passcd along a pipeline to allow parameters and features of the internal wall of the pipeline to be measured and/or gauged by the device as it passes therealong. The device is provided with members which protrude and contact with the inner surface of the pipeline directly or via contact means. Changes in condition of the members and/or contact means are detected, the associated data processed by the device and signals sent back to the device operator, and from which signals, an analysis of the condition and features of the internal wall of the pipeline can be undertaken without the need to shut off the How of material along the pipeline and without having to provide the device with complex movement sensing mechanisms.

## Description

Pipelines are used in many process industries for carrying fluids such as oil, chemicals and/or gases between different points within the process site and for the delivery of raw product to the process site and supply of finished product for transport. The invention to which this application relates is a device which can be used to analyse the condition and integrity of the pipeline without the need for the pipeline to be opened.

All operators who own pipes for the transportation of fluids are obliged to check the integrity of their pipelines at regular intervals and particularly those who operate pipelines which carry potentially hazardous materials at high pressures such as oil, gas, chemicals and the like. Thus there is a well known need to inspect lengths of pipelines but there is significant resistance to closing down the pipeline to allow the inspection, partly due to the cost to the pipeline operator of shutting down and starting up the pipeline and the lost time in between, and partly due to the safety problems which are caused by the shutting down and restarting of the flow of fluids through pipelines. In order to avoid the need to shut down pipelines it is known to provide a device, known as a PIG, which can pass through the pipeline and which is, in fact, driven along the line by the flow of the fluid. The devices are used to clean and inspect the line from the inside and one known type of inspection device is known as a Geometry PIG which is used to check the bore of new and existing pipelines.

One known system for measuring the internal shape and size of the pipeline is by providing the device with a body in which processing means are retained and, on the external surface of the device a series of metal arms are mounted which are arranged to rub along the inside of the pipe wall as the device passes along the pipeline via skids or wheels which contact with the wall of the pipeline. The arms are hinged with respect to the device body and as the arms angularly move with respect to the device as a result of changes in the dimensions of the internal wall of the pipeline so the degree of angular movement is translated into linear movement of a rod within the device which is then used to move a potentiometer device within the device. This method has the disadvantage that the mechanical design of the arms is fairly complex and the sensing assembly is expensive to produce. The mechanisms which allow the adjustment of the potentiometer by measuring the degree of angular adjustment of the arms are also typically mounted on the outside of the device body and are therefore exposed to the effects of the high pressure fluids in the pipeline. This leads to the sensors and/or arms being relatively prone to failure and as a result they need to be replaced quite frequently.

The aim of the present invention is to provide a device in a form which can move along a pipeline to provide measurements relating to the internal wall of the pipeline and which device can be used while the pipeline is live and carrying a fluid therealong and is robust to withstand the effects of the fluid in use.

In a first aspect of the invention there is provided a device for passage along a pipeline to allow the collection of data relating to the internal wall of the pipeline for subsequent analysis, said device comprising a body in which data processing means are housed and, on the external surface of the body at least one member is mounted and characterised in that said member is mounted in a fixed position on the device, and a portion of said member is movable in response to variations in the internal wall of the pipeline and the member is provided with at least one strain gauge in contact with the data processing means which is mounted to allow the extent of the movement of the member to be sensed.

In one embodiment of the invention, one end of each of the members is fixed in position on the device and the other, free, end is provided to be contactable with the internal wall. In this embodiment the strain gauges are preferably positioned on the members adjacent the end which is fixed in position on the device.

In an alternative embodiment a contact means is provided to contact the internal wall of the pipeline and in one embodiment the contact means is an arm which can be provided with a wheel, roller, skid or other device at the free end of the arm so that it is the skid, roller or wheel which contacts the wall rather than the free end of the member directly. In this arrangement the arm may be pressed against the pipe wall by resilient means and the strain gauge may be mounted on the member which may be in the form of the resilient means or a further member which presses against the arm and therefore moves in response to the movement of the arm.

In a yet further embodiment of the invention the said members of the device are provided to be resiliently movable in response to the movement of a contact means, in the form of a skid which in turn contacts with the pipeline wall. Thus, the contact means is mounted on the device to be in contact with the wall and the members are provided on the device with their free ends either directly or indirectly in contact with the contact means so as to allow the movement of the contact means to be sensed by the members and the strain gauge or gauges thereon. This arrangement is particularly well suited to allow the device to be bi- directional in that it can be passed along the pipeline in a first direction and then reversed and passed along the pipeline in the opposite direction without risk of the members becoming snagged on any dimension changes on the pipeline wall. It also means that the device can be introduced into the pipeline from either end of the same.

In a further feature of the invention the data processing means is held within a housing in the device and said housing is sealed from the external conditions in the pipeline so that the processing means can be maintained at atmospheric pressure.

Typically any suitable form of strain gauge arrangement can be used in conjunction with the members and it is possible that different strain gauge arrangements are suited for different embodiments of the invention.

Thus it will be appreciated that the members are attached to the device so that in use the part of the member which is in contact with the device is clamped in a fixed position. Thus there is no need for any movement mechanism to be provided between the member and device and the measurement data is passively taken via the strain gauge mounted on the member.

In a further aspect of the invention there is provided a member for attachment to a device for passage along the interior of a pipeline to collect data relating to the internal wall of the pipeline, said member attached in a fixed position on the device and having at least a portion which is resiliently movable in response to changes in the internal wall shape or dimension and characterised in that there is provided at least one strain gauge mounted on the member to sense and generate data in response to the movement of the member.

Typically one end of the member is attached to the device and the free end is either directly contactable with the pipeline internal wall or is in contact with a contact means which in turn contacts the internal wall of the pipeline.

In one embodiment the invention which is the subject of the application represents a new type of inspection system for measuring and recording the internal profile of pipelines. The members with the strain gauges provide a novel form for sensing movement of either the members themselves and/or arms in contact with the internal wall of the pipeline with improved resolution and performance and the on-board digital electronics allow the collection and storage of data, automatic processing of the data to identify key features on the pipe and a simple method of downloading and presenting the data to the operator at the end of the run. These features provide a significant technical advance over existing products on the market.

Specific embodiments of the invention will now be described with reference to the accompanying drawings wherein
Figure 1 illustrates a schematic plan view of a PIG device in a pipeline in section;
Figure 2 illustrates the device of Figure 1 with the members according to one embodiment of the invention fitted thereto;
Figure 3 illustrates one of the members of Figure 2 in more detail;
Figure 4 illustrates one strain gauge arrangement according to the invention;
Figure 5 illustrates the member of Figure 3 in conjunction with the device;
Figure 6A illustrates an alternative form of strain gauge arrangement;
Figure 6B illustrates a member using the strain gauge arrangement of Figure 6A;
Figure 7 illustrates an alternative embodiment of a member according to the invention; and
Figures 8A-8C illustrate a further embodiment of a member according to the invention.

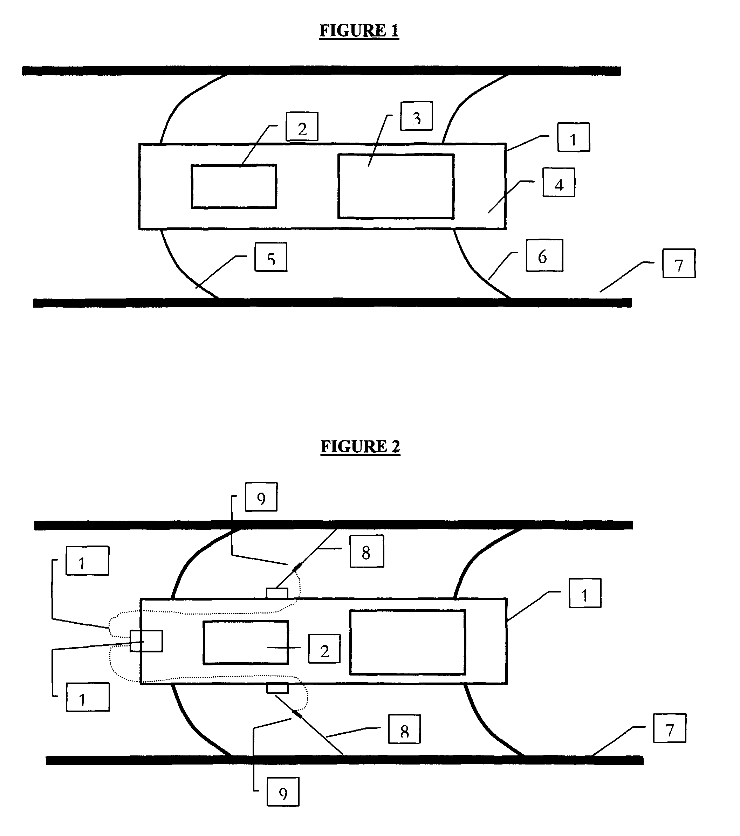

Referring firstly to Figure 1 there is illustrated a device body (1) according to the invention, which body can be propelled along a pipeline by the fluid passing along the pipeline. Within the device body there is provided a pressure vessel which houses the data processing means 2 and a battery pack 3 which acts as a power source for the processing means. The interior 4 of the pressure vessel is maintained at atmospheric pressure to isolate the data processing means from the high pressures and aggressive fluids which are often encountered in pipelines. Rubber cups or discs 5,6 are mounted on the outside of the body, typically one at the front and one at the rear. The diameter of the cups are chosen to match or be slightly less than the circumference of the internal wall of the pipe 7 and they act to suspend the vehicle and allow the device to be driven down the pipe using the flow of the fluid in the pipe. The dimensions of the device body are designed to allow the same to pass significant obstructions in the pipe, tight radius bends and full bore off-takes.

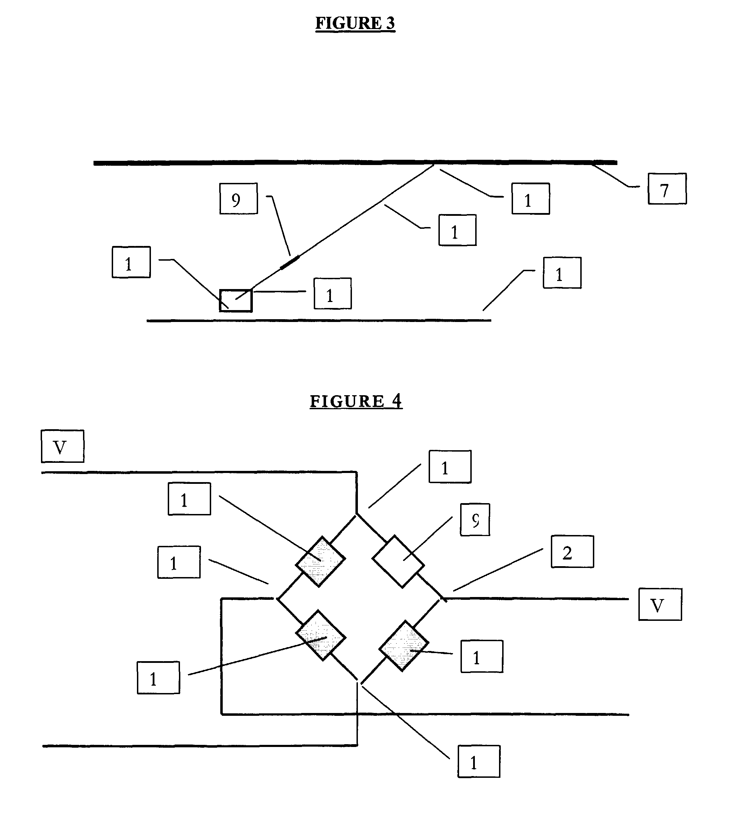

Figure 2 illustrates one embodiment of the device body with sensors according to the invention attached thereto. The sensors for measuring the features and dimensions of the internal wall of the pipeline comprise members which are mounted on the outside of the pressure vessel as shown in Figure 2. One end of each of the members 8 is fixed to the outside of the body 1 and the other, free end of each member rubs along the inside of the pipe wall 7. Strain gauges 9 are fixed to each member. Variations in the internal wall bore dimensions of the pipeline deflect the members producing a change in output of the strain gauges. The strain gauges are connected by wires 10 to the data processing means 2 in the body 1. The wires pass through a sealed connector 11 which maintains the pressure seal inside the vessel. Changes in output of the sensors are recorded by the data processing means 2.

In one embodiment the members 8 comprises a strip of metal 12 with a strain gauge sensor 9 mounted on one face as shown in Figure 3. The metal strip is fixed to the device body 1 by a clamping arrangement 13 at one end and the free end 14 rubs along the internal wall of the pipe 7. The metal finger is mounted at an angle to the device body 1 in order to optimise the measurement range of the member. The length and thickness of the member and the angle to the device body is selected so that the member is under minimum strain when the bore of the pipe is at a maximum and under maximum strain when the bore of the pipe is a minimum. At the position of maximum deviation and hence strain, the strain on the member must be within the elastic limit of the material in order to allow the same to resiliently return towards the rest position to avoid an offset of the rest position of the member occurring. The area of maximum strain on the member is where it is clamped 15 to the device body with the level of strain gradually reducing the further from this location along the member towards the free end. Thus, in order to obtain the most sensitive and accurate data it is preferred to position the strain gauge close to the clamping point 15.

In the embodiment described, the material selected for the member can be beryllium copper as favourable characteristics of this material are that it has a good spring response with a high yield point relative to its UTS and a low hysteresis. Beryllium copper also has the advantage that it has good resistance to corrosion and it is capable of withstanding the effects of corrosive and aggressive fluids in the pipeline. One possible set of dimensions are 150mm long, 12 mm wide and 0.6mm thick. This gives a measurement or displacement range of +/- 75mm about the rest position.

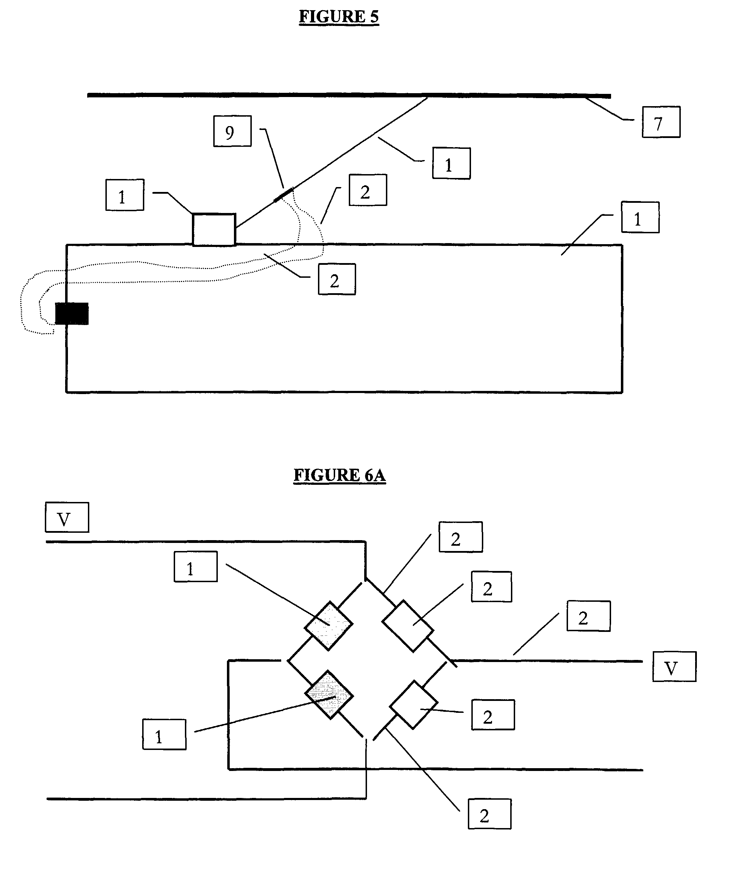

In use the strain gauge device is bonded to the member as shown in Figure 3 12mm from the clamped end 15 and the gauge is orientated to measure the longitudinal bending strain in the member. The strain gauge can be a resistive device and the resistance changes in proportion to the strain applied to the gauge. Many methods can be used to measure the change in the resistance of the gauge but the most common is to use a whetstone bridge circuit as shown in Figure 4 in schematic form. The strain gauge 9 is used as one arm of the whetstone bridge and the other three arms comprise fixed resistors 16. This is called a quarter bridge configuration. A fixed voltage (VS) is applied across two arms of the bridge 17, 18 and the output voltage (Vo) is measured across the other two arms 19, 20. The physical arrangement of the circuit is shown in Figure 5 where the fixed resistors 16 are located inside the pressure vessel 1. This arrangement has the advantage that only two wires 21, 22 are required to connect the strain gauge 9 to the circuit inside the pressure vessel.

A disadvantage of the quarter bridge configuration is that the resistance of the strain gauge also varies with temperature and this can not be differentiated from resistance changes which are due to the strain. To avoid this problem an alternative half bridge configuration can be used as shown in Figure 6a. In this arrangement one strain gauge 23 is bonded to the top surface of the member 12 and one 24 is bonded to the bottom surface so that when the member bends, one gauge 23 is in tension and one 24 is in compression. If the two gauges are connected as shown in Figure 6b, then as the finger bends, the resistance of gauge 23 increases and the resistance of gauge 24 decreases and the change in resistance of the two gauges are effectively added together and generate twice the change in output voltage Vo compared to a quarter bridge configuration. However, if the temperature rises, then the resistance of both gauges will increase by a similar amount and the voltage at the measurement point will remain constant. This configuration can therefore produce an improved sensitivity to bending of the member and a reduced sensitivity to changes in temperature. In this case three wires 25, 26 & 27, are required to connect the strain gauge pair 23, 24 to the fixed resistors 16 in the whetstone bridge circuit inside the pressure vessel 1.

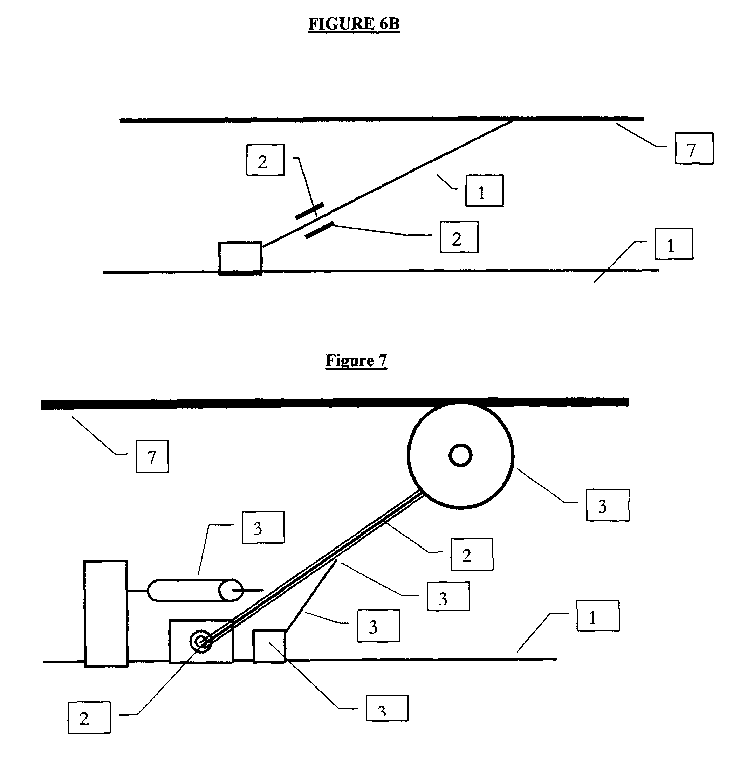

An alternative arrangement for the sensor is disclosed in Figure 7 in which contact means are provided, in this embodiment in the form of an arm provided at its free end with a skid or wheel. The arm 28 is fixed at one end 29 to the device body 1 and the other, free end of the arm 28 has a wheel or skid 30 which runs along the inside of the internal wall of the pipe 7. A spring arrangement 31 is used to press the wheel or skid 30 against the wall of the pipe 7. The strain gauge member 32 is fixed at one end 33 to the device 1 and the other end 34 rests against the arm 28. As the arm 28 moves in response to variations in the pipe bore, the arm 28 presses against the member 32 and causes it to move producing a change in output from the strain gauge which can be mounted on the member 32 or alternatively on a member in the form of the spring arrangement 31 in which case there may be no need for the additional member 32. By carrying out measurements, the movement of the arm 28 can be related to output from the strain gauge sensor. This arrangement may be used in pipelines where the inside surface of the pipe is abrasive and likely to wear away the end of the finger during a measurement run.

In some instances it is necessary to reverse the direction of travel of the device in a pipeline if, for example, the pipe contains an obstruction beyond which it is not possible for the device to pass. If this happens then the device can become stuck and the flow of fluid in the pipeline is severely restricted but by reversing the flow of fluid it is possible to return the device to the launch point. In further examples, the device may only be able to enter and leave the pipeline at one end or more than one survey of the pipe may be required and to save time and cost rather than launching the device at one end, receiving at the other end, transporting it back to the start and repeating the process, it is easier and quicker to run the device to the other end and then reversing the flow and returning the device along the pipeline to carry out the second survey in the reverse direction.

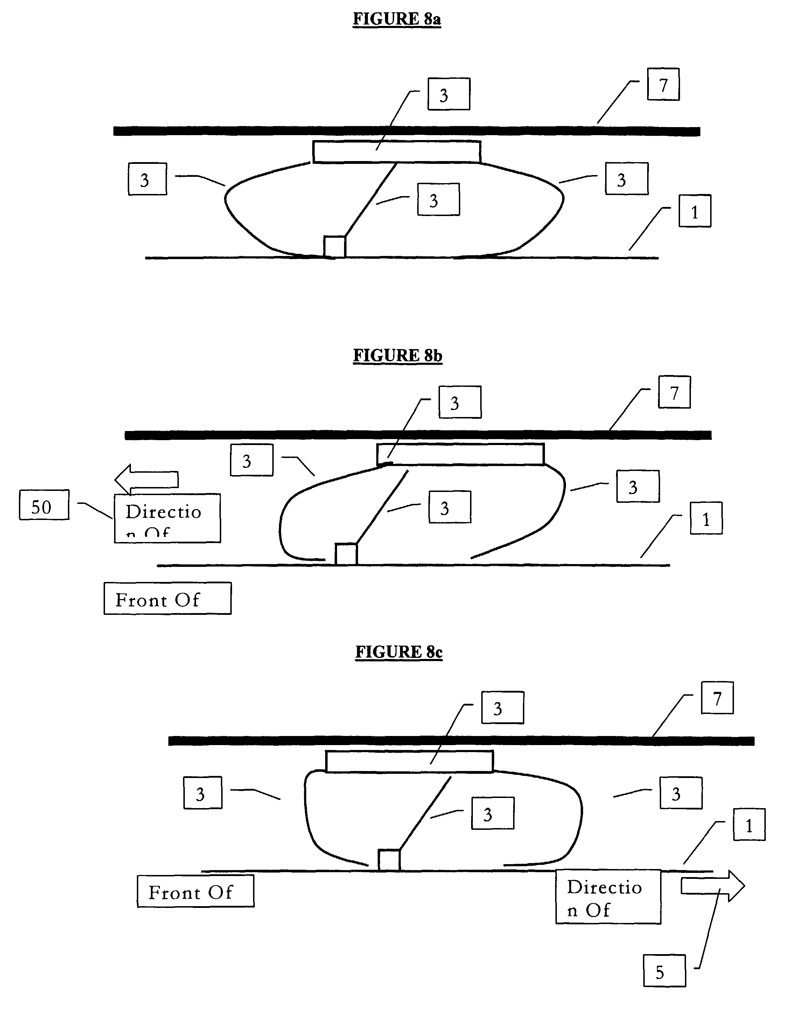

The device of the invention in one embodiment allows the bidirectional movement of the device to be achieved by providing a sensor arrangement which can be used with the device travelling in either direction. Figure 8a shows contact means in the form of a skid 35 which runs along the internal wall of the pipe 7. The skid 35 is supported by flexible loops 36,37 which are fixed at one end to the skid 35 and at the other end to the device body 1. As the bore of the pipe changes, the skid moves towards and away from the device body. If the device is moving in a first direction 50 the friction on the skid 35 against the pipe wall 7 pushes it towards the rear of the device to the position shown in Figure 8b. If the pig is moving in a second reverse direction 52 then the friction on the skid 35 against the pipe wall 7 pushes it towards the front of the pig as shown in Figure 8c. The member 38 is fixed to the device 1 at one end and the other end rests against the underside of the skid 35. If the direction of the device is in the direction 50, then the member rests against the skid as shown in figure 8b. If the direction of the device is reversed, the skid moves towards the front of the device and the member 38 slides along the inside surface of the skid to the new position. However, in each case, the skid 35 remains parallel to the wall 7 of the pipe and at the same distance from the device body 1. The bending strain from the strain gauge arrangement mounted on the member 38 is therefore the same regardless of the direction of movement and therefore the output from the strain gauge on the member is unaffected by the direction of movement. By acting on the skid, the strain gauge member is able therefore to measure the pipe bore with the pig travelling in either direction.

In one arrangement, although not shown, the strain gauges may be mounted directly on the resilient means which act on the skid in Figures 8A-C or on the wheel or roller arm of Figure 7. For example, in Figures 8A-C the strain gauges can be mounted on the flexible loops 36 37 which act on the skid. This would therefore mean that there was no need for the additional member 38 as there is no need for the strain gauges to be mounted thereon. It should therefore be appreciated that general reference herein to the strain gauges being mounted on the member can include the strain gauges being mounted on members such as resilient means and springs, which also perform another function in the operation of the device according to the invention. This arrangement also has the additional advantage of reducing the external components of the device.

Thus the use of the member and strain gauge arrangements as herein described on a PIG device include that the sensor formed by the member and strain gauge is effectively 'solid state', i.e. they have no moving parts and because of this they can more easily be protected against the high pressures and the corrosive fluids in the pipelines. The members and strain gauges can be used to measure large deflections with high resolution and they can be designed with a fast response so that they can be used for high speed surveys.

In the implementations described, the members and strain gauge arrangements are of relatively low cost to produce. The mass of the member is small and therefore the inertia of the free end is also small and so the dynamic response of the member is much faster than a wheel and arm assembly used on other measurement pigs. The low inertia of the member also ensures that the member will follow deviations in the pipe wall at relatively high speeds along the pipeline. As the member is pushed against the wall of the pipe or the other contact means using the natural spring of the material the spring force is low and therefore the wear on the end of the finger is minimised.

## Claims

1. A device for passage along a pipeline to allow the collection of data relating to the internal wall of the pipeline (7) for subsequent analysis, said device comprising a body (1) in which data processing means (2) are housed and, on the external surface of the body at least one member (8; 32; 31; 36; 37; 38) is mounted and characterised in that said member is mounted in a fixed position on the device, and a portion of said member is movable in response to variations in the internal wall of the pipeline and the member (8; 32; 31; 38) is provided with at least one strain gauge (9) in contact with the data processing means which is mounted to allow the extent of the movement of the member (8; 32; 31; 36; 37; 38) to be sensed.

2. A device according to claim 1 characterised in that the device is provided with a plurality of members.

3. A device according to claim 1 characterised in that each member is fixed in position on the device at one end and another, free, end (14) is provided to be resiliently biased towards contact with the internal wall of the pipeline.

4. A device according to claim 3 characterised in that the strain gauge is positioned on the member adjacent the end which is fixed in position on the device.

5. A device according to claim 1 characterised in that a contact means (28, 30; 35,36,37) is provided in contact with the device, said contact means provided so that it is this which contacts the internal wall of the pipeline.

6. A device according to claim 5 characterised in that the contact means is an arm (28) provided with a wheel, roller skid or other device (30) at the free which contact with the internal wall of the pipeline.

7. A device according to claim 5 characterised in that the contact means is biased towards the internal wall of the pipeline by resilient means (31; 36,37).

8. A device according to claim 7 characterised in that a strain gauge is mounted on the member in the form of resilient means (31;36; 37) to gauge the movement of the contact means.

9. A device according to claim 5 characterised in that a strain gauge is mounted on a member (32; 38) which presses against the contact means to gauge the movement of the contact means.

10. A device according to claim 1 characterised in that each member of the device is provided to be resiliently movable in response to the movement of a contact means which in turn contacts with the internal wall of the pipeline.

11. A device according to claim 10 characterised in that the movement of the contact means is sensed by a strain gauge or gauges mounted on the contact means.

12. A device according to claim 10 characterised in that the movement of the contact means is sensed by a strain gauge or gauges mounted on the member.

13. A device according to claim 1 characterised in that the device is bi- directional in that it can be passed along the pipeline in a first direction and then pass along the pipeline in the opposite direction.

14. A device according to claim 1 characterised in that the data processing means (2) are held within a housing (1) in the device and said housing is sealed from the external conditions in the pipeline so that the data processing means can be maintained at atmospheric pressure.

15. A member (8; 32; 31; 36;37;38) for attachment to a device for passage along the interior of a pipeline (7) to collect data relating to the internal wall of the pipeline, said member (8; 32; 31; 36; 37; 38) attached in a fixed position on the device and having at least a portion which is resiliently movable in response to changes in the internal wall shape or dimension and characterised in that there is provided at least one strain gauge (9) mounted on the member (8;32; 31; 36; 37; 38) to sense and generate data in response to the movement of the member.

16. A member according to claim 15 characterised in that one end of the member is attached to the device and the free end is directly contactable with the internal wall of the pipeline.

17. A member according to claim 15 characterised in that one end of the member is attached to the device and a free end of the member is biased to contact with a contact means arm mounted on the device which in turn contacts the internal wall of the pipeline.

18. A member according to claim 15 characterised in that the member is formed from beryllium copper.
